# EUROPÄISCHE PATENTSCHRIFT

(11) **EP 1 061 295 B1**
(45) Veröffentlichungstag und Bekanntmachung des Hinweises auf die Patenterteilung: **09.03.2005**
(21) Anmeldenummer: 00890129.0
(22) Anmeldetag: 26.04.2000
(51) Int. Cl.: F16J 15/26, F16J 15/56

(54) **Abstreifanordnung**
Scraping arrangement
Dispositif racleur

(30) Priorität: 16.06.1999 AT 106099
(43) Veröffentlichungstag der Anmeldung: 20.12.2000
(73) Patentinhaber: Hoerbiger Kompressortechnik Holding GmbH, 1040 Wien (AT)
(72) Erfinder: Radcliffe, Christopher David, Dr., Leeds, West Yorkshire LS18 5 ED (GB); White, Jonathan G., Keighley, West Yorkshire BD22 9 JF (GB)
(74) Vertreter: Pinter, Rudolf, Dipl.-Ing.

(56) Entgegenhaltungen:
- GB-A- 1 380 462
- US-A- 1 828 178
- US-A- 3 076 659
- US-A- 4 039 197
- US-A- 4 706 971
- PATENT ABSTRACTS OF JAPAN vol. 012, no. 347 (M-743), 19. September 1988 (1988-09-19) & JP 63 106466 A (SANYO KOKUSAKU PULP CO LTD), 11. Mai 1988 (1988-05-11)
- PATENT ABSTRACTS OF JAPAN vol. 009, no. 139 (M-387), 14. Juni 1985 (1985-06-14) & JP 60 018664 A (NIPPON PISTON RING KK), 30. Januar 1985 (1985-01-30)

## Beschreibung

Die Erfindung betrifft eine Abstreifanordnung zur Verhinderung des Durchtrittes von Flüssigkeit am Umfangsspalt zwischen einem hin- und hergehenden Bauteil und einer diesen umgebenden Gehäuseöffnung, insbesonders Ölabstreifpackung für die Kolbenstange eines Hubkolbenkompressors, mit einer im Bereich der Gehäuseöffnung um den Bauteil ausgebildeten Abstreifbuchse, die zumindest einen Abstreifring aufnimmt und eine Ableitung zur Abführung der abgestreiften Flüssigkeit aufweist.

Um an hin- und hergehenden, abgedichteten Bauteilen, wie etwa der erwähnten Kolbenstange eines Hubkolbenkompressors, an Dampfmaschinen, hydraulischen Pumpen bzw. Pressen oder dergleichen, den Durchtritt von Arbeits-Kühl- oder Schmierflüssigkeiten an der Abdichtung zu verhindern, werden heutzutage meist zusätzlich zu sonstigen Dichtungen Packungen mit speziellen Abstreifringen eingesetzt, mittels welcher die Flüssigkeit vom bewegten Bauteil abgestreift und rückgeführt oder separat abgeleitet wird (siehe z.B. US 1,828,178). Um stets in abstreifendem Kontakt mit der Oberfläche des bewegten Bauteils bleiben zu können, müssen diese Abstreifringe in Bewegungsrichtung des Bauteiles etwas Spiel in der Abstreifbuchse haben, um der Oberfläche des abzustreifenden Bauteils folgen zu können und damit beispielsweise auch unterschiedliche Wärmeausdehnungen nicht zu einer Behinderung einer Relativbewegung der Abstreifringe untereinander bzw. zur Abstreifbuchse durch Klemmen führen können, was zu größeren Undichtheiten und zum unerwünschten Durchtritt der abzustreifenden Flüssigkeit führen würde. Speziell auf der dem Raum mit der abzustreifenden Flüssigkeit zugewandten Eintrittsseite der Abstreifbuchse kommt es dadurch bei den bisher bekannten Anordnungen der genannten Art stets zu einer relativ großen Menge an in radialer Richtung zwischen dem ersten Abstreifring und der Innenseite der Abstreifbuchse eintretender Flüssigkeit, deren möglichst rasche Ableitung aus dem dahinterliegenden Packungsraum zur Folge von zumeist nur klein auszuführenden und dementsprechend leicht verstopfenden Ableitungen oft Schwierigkeiten macht, womit die zumeist vorhandenen weiteren Abstreifringe oder ähnliche Elemente mit der dann nicht nur am hin- und hergehenden Bauteil haftenden sondern im gesamten Packungsraum vorhandenen Flüssigkeit große Probleme haben.

Aufgabe der Erfindung ist es, eine Anordnung der eingangs genannten Art so zu verbessern, dass die erwähnten Nachteile der bekannten derartigen Anordnungen vermieden werden und dass insbesonders auf konstruktiv einfache Art ein übermäßiger Flüssigkeitseintritt in die Abstreifbuchse verhindert wird.

Diese Aufgabe wird gemäß der vorliegenden Erfindung bei einer Abstreifanordnung der eingangs genannten Art dadurch gelöst, dass an der dem Eintritt der abzustreifenden Flüssigkeit zugewandten Seite der Abstreifbuchse ein Drosselring zusammen mit zumindest einem Abstreifring in einer gemeinsamen Kammer vorgesehen ist, der an seiner dem Eintritt der Flüssigkeit zugewandten Stirnseite mit glatter Ringfläche ausgeführt ist und unter der Wirkung der Haftkraft in der Flüssigkeit im Betrieb an der ihm zugewandten, glatten inneren Stirnfläche der Abstreifbuchse haftet. Damit ist der mögliche Flüssigkeitseintritt in die Abstreifbuchse auf den verbleibenden Ringspalt zwischen bewegtem Bauteil und Drosselring begrenzt. Dieser Ringspalt kann einerseits üblicherweise deutlich kleiner und damit in seiner Auswirkung auf den möglichen Flüssigkeitseintritt weniger problematisch ausgeführt sein als der - wie erwähnt für die Beweglichkeit der Abstreifringe erforderliche - in axialer Richtung zumindest bei der "Einwärts"-Bewegung des abzustreifenden Bauteils immer an der Eingangsseite vorliegende Spalt bei den üblichen derartigen Anordnungen und ist andererseits auch deswegen weit weniger kritisch, weil die durch ihn noch hindurchtretende Flüssigkeitsmenge im wesentlichen ohnedies auf dem hin- und hergehenden Bauteil haftet und somit vom nachfolgend angeordneten Abstreifring abgestreift und sodann wie beschrieben abgeführt wird. Von den beiden eintrittsseitig der Abstreifbuchse für die vom hin- und hergehenden Bauteil abzustreifende Flüssigkeit verbleibenden Wegen ist somit der kritischere, größere Flüssigkeitsmengen erlaubende Weg zwischen der Stirnseite des ersten Ringes der Packung und der inneren Stirnseite der Abstreifbuchse einfach und zuverlässig gesperrt, wobei das erforderliche dichte Anliegen des Drosselringes an der zugehörigen inneren Stirnseite der Abstreifbuchse bei der "Auswärts"-Bewegung des hin-und hergehenden Bauteils (aus der Abstreifbuchse hinaus) ohnedies durch den hin- und hergehenden Bauteil bzw. die darauf angeordneten Abstreifringe sichergestellt wird, während in der anderen Richtung die Haftkraft in der Flüssigkeit im Spalt zwischen innerer Stirnseite der Abstreifbuchse und zugehöriger Stirnfläche des Drosselringes ausreichend groß sein muß, um für die kurze Dauer dieser Bewegung sicherzustellen, daß dieser Eintrittsweg für die abzustreifende Flüssigkeit nicht geöffnet wird.

Der Drosselring ist nach einer bevorzugten weiteren Ausgestaltung der Erfindung geteilt, vorzugsweise diagonal zweigeteilt, und wird im eingebauten Zustand von einem an seinem Außenumfang aufliegenden Federelement zusammengehalten, wobei sein Innendurchmesser geringfügig größer als der Außendurchmesser des hin- und hergehenden Bauteils ist. Dies erlaubt eine einfache Montage des Drosselringes, wobei durch die erwähnten Durchmesserverhältnisse sichergestellt ist, daß der hin- und hergehende Bauteil praktisch frei durch den Drosselring bewegbar ist - es erfolgt insbesonders keine Abstreifen der zu entfernenden Flüssigkeit vom hin- und hergehenden Bauteil, was ja wie oben beschrieben von den nachfolgenden Abstreifringen erledigt wird.

An dieser Stelle ist zu bemerken, daß der hin- und hergehende Bauteil auch eine von der reinen, bei derartigen Antriebsstangen und dergleichen weitgehend üblichen Kreiszylinderform abweichende Ausbildung aufweisen kann - insbesonders können mit der beschriebenen Abstreifanordnung natürlich auch ovale oder mit sonstigem Querschnitt ausgebildete Schubstangen oder dergleichen ausgestattet werden soferne nur die "Abstreifringe" bzw. "Drosselringe" eine entsprechend angepaßte Innenkontur aufweisen.

Nach einer besonders bevorzugten weiteren Ausbildung der Erfindung besteht der Drosselring aus Kunststoff, vorzugsweise faserverstärktem Kunststoff, wie etwa PTFE (Polytetrafluoräthylen) mit Glasfaser- oder Kohlefaserverstärkungen. Derartige Ringe sind einfach in der Herstellung und chemisch sehr stabil, sodaß sie für die meisten der in Frage kommenden Anwendungen geeignet sind.

Die Ringfläche zwischen den Stirnflächen von Abstreifbuchse und Drosselring ist in weiters bevorzugter Ausgestaltung der Erfindung wesentlich, vorzugsweise etwa zehn mal, größer als die stirnseitige Kontaktfläche der (des) Abstreifringe(s). Auf diese Weise ist einerseits durch die große Anlagefläche eine gute Dichtung dieses möglichen Eintrittsweges der abzustreifenden Flüssigkeit in die Abstreifbuchse gegeben und andererseits sichergestellt, daß die auch auf der anderen Seite, nämlich zwischen Drosselring und nachfolgendem Abstreifring, gegebene Haftkraft in der Flüssigkeit wesentlich kleiner bleibt als die erfindungswesentliche Haftkraft zwischen Drosselring und zugehöriger Stirnseite der Abstreifbuchse, sodaß der Drosselring beim einwärtsgerichteten Hub des abzustreifenden Bauteils relativ zur Abstreifbuchse stehenbleibt, wogegen der nachfolgende Abstreifring unter Ausnutzung des axialen Spiels in der Abstreifbuchse sich mit dem Bauteil geringfügig mitbewegen kann.

Der bzw. jeder an der dem Eintritt der abzustreifenden Flüssigkeit abgewandten Seite des Drosselringes in der Abstreifbuchse angeordnete Abstreifring ist in weiters bevorzugter Ausgestaltung der Erfindung geteilt, vorzugsweise diagonal zweigeteilt, wird im eingebauten Zustand von einem an seinem Außenumfang aufliegenden Federelement zusammengehalten und besteht aus metallischem Werkstoff, vorzugsweise Lagerbronze. Damit kann die abstreifende Wirkung dieses dem Drosselring in Richtung des Eintrittes der abzustreifenden Flüssigkeit nachfolgenden Abstreifringes verbessert bzw. sein Einbau vereinfacht werden - die Ausführung aus Lagerbronze ermöglicht praktisch spielfreies Aufliegen auf dem hin- und hergehenden Bauteil ohne allzugroße Reibung bzw. die damit verbundenen Probleme.

Im zuletzt genannten Zusammenhang besonders vorteilhaft ist eine weitere Ausbildung der Erfindung, gemäß welcher die radiale Dicke des Abstreifringes unter Berücksichtigung von Festigkeits- und Herstellungsanforderungen möglichst klein, vorzugsweise etwa 4 mm, ist. Damit kann sich der Abstreifring noch gut an die Oberfläche des hin- und hergehenden Bauteils anpassen, was besonders dann vorteilhaft ist, wenn dieser Bauteil Abweichungen von der beispielsweise kreiszylindrischen Idealform oder bereits entsprechende Abnutzungen aufweist. Durch diese geringe radiale Dicke kann auch die Kraft des am Außenumfang aufliegenden Federelementes relativ klein gehalten werden, was wiederum die oben angesprochenen Reibungsverluste bzw. auch damit verbundene Erwärmungen, Ausdehnungen und dergleichen verringert.

Der Abstreifring weist nach einer weiteren besonders bevorzugten Ausgestaltung der Erfindung an seiner dem Eintritt der abzustreifenden Flüssigkeit zugewandten Seite eine im eingebauten Zustand in Kontakt mit dem hin- und hergehenden Bauteil liegende Abstreifkante und von dieser ausgehend einen sich zur anderen Seite hin öffnenden, leichten Kegelbereich am Innenumfang auf. Damit ist einerseits die möglichst spielfreie, dichte Anlage des Abstreifringes auf eine sich relativ leicht einschleifende Abstreifkante konzentriert. Andererseits wird damit ermöglicht, daß beim Abstreifen zufolge von Rauhigkeiten des hin- und herbewegten Bauteils noch unter der Abstreifkante hindurchgelangende Flüssigkeit (Flüssigkeitsfilm) bei der Retourbewegung des hin- und hergehenden Bauteils wieder zurück mitgenommen und nicht auf der gegenüberliegenden anderen Seite des Abstreifringes abgestreift und damit auf unerwünschte Weise bleibend hinter die Abstreifanordnung transportiert wird.

Drosselring und Abstreifring weisen nach einer weiters bevorzugten Ausgestaltung der Erfindung jeweils an ihrer dem Eintritt der abzustreifenden Flüssigkeit abgewandten Stirnseite im wesentlichen radial ausgerichtete Ablaufnuten auf, womit zwischen diesen Elementen ein weitgehend ungehinderter Abfluß der abgestreiften Flüssigkeit stattfinden kann, ohne daß separate Abstandselemente oder dergleichen vorzusehen sind.

An der dem Drosselring abgewandten Seite der (des) Abstreifringe(s) kann in weiters bevorzugter Ausgestaltung der Erfindung zumindest ein Gas-Dichtringset und/oder ein mit der dem Eintritt der abzustreifenden Flüssigkeit abgewandten inneren Stirnfläche der Abstreifbuchse zusammenwirkender weiterer Drosselring in der Abstreifbuchse angeordnet sein. Damit ist eine weitere Verbesserung der Abstreifwirkung auch an der - bezogen auf den Eintritt der abzustreifenden Flüssigkeit - äußeren Seite der Abstreifbuchse erreicht.

Die Erfindung wird im folgenden noch anhand der in der Zeichnung schematisch dargestellten Ausführungsbeispiele näher erläutert.

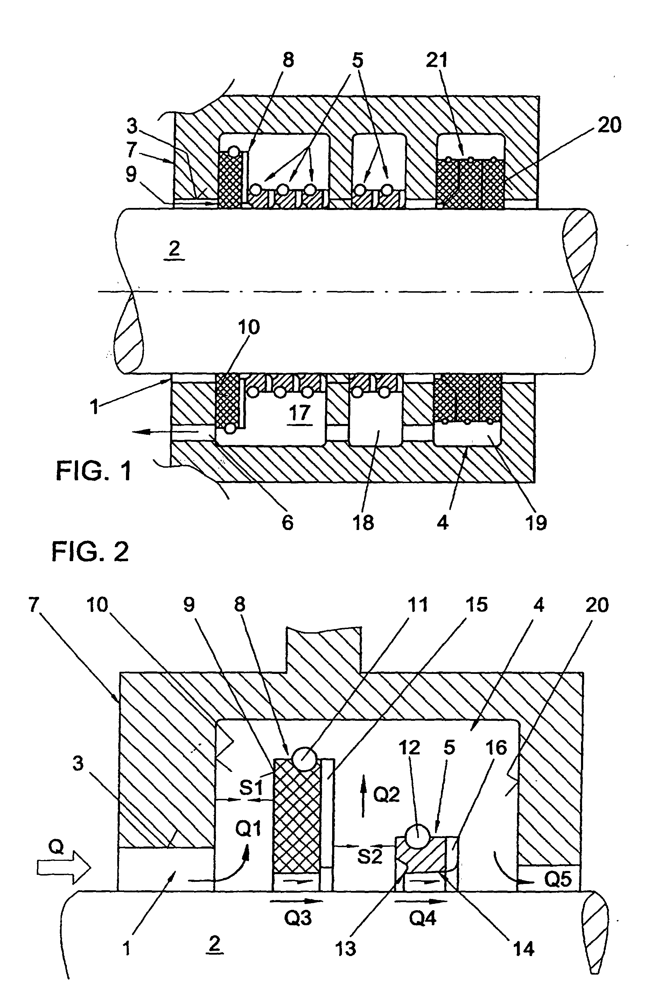

Fig. 1 zeigt dabei einen schematischen Querschnitt durch eine erfindungsgemäße Abstreifanordnung und Fig. 2 zeigt eine weitere schematische Darstellung einer prinzipiellen Ausführung der erfindungsgemäßen Anordnung.

Die in beiden Figuren dargestellte Abstreifanordnung zur Verhinderung des Durchtrittes von Flüssigkeit am Umfangsspalt 1 zwischen einem hin- und hergehenden Bauteil 2 und einer diesen umgebenden Gehäuseöffnung 3 weist eine im Bereich der Gehäuseöffnung 3 um den Bauteil 2 ausgebildete Abstreifbuchse 4 zur Aufnahme zumindest eines Abstreifringes 5 auf, wobei die vom hin- und hergehenden Bauteil 2 abgestreifte Flüssigkeit über eine Ableitung 6 (nur in Fig. 1 ersichtlich) abgeführt bzw. in einen entsprechenden Kreislauf rückgeführt wird. An der dem Eintritt der abzustreifenden Flüssigkeit zugewandten Seite 7 ist in der Abstreifbuchse 4 ein Drosselring 8 zusammen mit zumindest einem Abstreifring (5) in einer gemeinsamer Kammer vorgesehen, der an seiner dem Eintritt der Flüssigkeit zugewandten Stirnseite mit glatter Ringfläche 9 ausgeführt ist und unter der Wirkung der Haftkraft in der Flüssigkeit an der ihm zugewandten, glatten inneren Stirnfläche 10 der Abstreifbuchse 4 haftet. Durch diese Anordnung des Drosselringes 8 wird der Eintritt der vom Bauteil 2 abzustreifenden Flüssigkeit in die Abstreifbuchse 4 wesentlich verringert, wie dies im folgenden anhand der Prinzipdarstellung in Fig. 2 noch näher erläutert wird.

Fig. 2 zeigt eine grundsätzliche Ausführungsform der Abstreifanordnung, wobei hier nur ein einzelner Drosselring 8 samt Abstreifring 5 in der Abstreifbuchse 4 dargestellt ist - die Abstände bzw. Spalte zwischen den Einzelkomponenten sind zur Verdeutlichung der möglichen Flüssigkeitswege extrem vergrößert.

Die von der Seite 7 her zum Umfangsspalt 1 bzw. zur Gehäuseöffnung 3 gelangende Flüssigkeitsmenge ist mit Q bezeichnet. Der in die Abstreifbuchse 4 gelangende Teilstrom setzt sich zusammen aus den Teilmengen Q1 zwischen der Ringfläche des eingangsseitig ersten Ringes - hier des Drosselringes 8 - und der inneren Stirnfläche 10 der Abstreifbuchse 4 sowie der Teilmenge Q3 zwischen Innenumfang des ersten Ringes (hier Drosselringes 8) und der Oberfläche des abzustreifenden Bauteils 2 selbst. Mit Q2 ist die am Abstreifring 5 von der Oberfläche des hin- und herbewegten Bauteils 2 abgestreifte Flüssigkeitsmenge bezeichnet, die über die Ableitung (6 in Fig. 1) aus der Abstreifbuchse 4 zumeist einfach unter der Wirkung der Schwerkraft wieder austritt. Q4 bezeichnet die den Abstreifring 5 trotzdem noch passierende, auf der Oberfläche des abzustreifenden Bauteils 2 (hauptsächlich zufolge von dessen Rauhigkeit) noch anhaftende Flüssigkeitsmenge und Q5 schließlich die trotz aller Abstreifmaßnahmen noch hinter die Abstreifbuchse 4 transportierte Flüssigkeitsteilmenge.

Da der Abstreifring 5 (bzw. die Abstreifringe 5 bei Mehrfachanordnung beispielsweise gemäß Fig. 1) an den seitliche Ringflächen in gewissen Grenzen frei beweglich sein muß und insbesonders nicht eingeklemmt sein darf um dem abzustreifenden Bauteil 2 bzw. eventuellen Unregelmäßigkeiten in dessen Oberfläche folgen zu können, muß für den Abstreifring 5 in axialer Richtung Spiel vorgesehen werden, was bei den bisher bekannten Abstreifanordnungen ohne eingangsseitigen Drosselring 8 unmittelbar dazu führt, daß bei jedem Einwärtshub des Bauteils 2 (nach rechts in der Darstellung gemäß Fig. 1 und 2) an der Eintrittsseite ein relativ großer Spalt zur inneren Stirnfläche 10 der Abstreifbuchse 4 geöffnet wird, womit eine relativ große Teilmenge Q1 in die Abstreifbuchse 4 gelangen kann. Um diese Teilmenge Q1 beim einwärtsgerichteten Hub des Bauteils 2 zu verhindern ist nun der Drosselring 8 vorgesehen, dessen Ringfläche 9 unter der Wirkung der Haftkraft in der Flüssigkeit (symbolisiert durch S1) an der inneren Stirnfläche 10 der Abstreifbuchse 4 haftet, wobei bevorzugt die Ringfläche zwischen den Stirnflächen 9 bzw. 10 von Abstreifbuchse 4 und Drosselring 8 wesentlich größer als die stirnseitige Kontaktfläche des Abstreifrings 5 mit dem Drosselring 8 ist, damit die auch dort auftretende Haftkraft S2 kleiner bleibt als S1.

Beim einwärtsgerichteten Hub des Bauteils 2 wird damit (zumindest über die begrenzte Zeit der Wirkung der Haftkraft, bevor die Flüssigkeit unter der Wirkung des im Spalt dabei auftretenden Unterdruckes diesen ausfüllt) der Drosselring 8 in abdichtendem Kontakt mit der inneren Stirnfläche 10 bleiben, wogegen der Abstreifring 5 in axialer Richtung sich bis zur Anlage an der hinteren inneren Stirnfläche 20 der Abstreifbuchse 4 mitbewegen kann. Beim auswärtsgerichteten Hub des Bauteils 2 (Bewegung nach links in den Fig. 1 und 2) wird der Drosselring 8 durch den Bauteil 2 selbst bzw. den nun wiederum in der Darstellung nach links mitgenommenen Abstreifring 5 an die innere Stirnfläche 10 gedrückt. In beiden Fällen ist also der Weg für die Teilmenge Q1 praktisch geschlossen, sodaß der Eintritt der abzustreifenden Flüssigkeit in die Abstreifbuchse 4 praktisch nur über den Teilstrom Q3 am Innenumfang des Drosselringes 8 erfolgen kann.

Der Drosselring 8 ist vorzugsweise diagonal zweigeteilt und wird im eingebauten Zustand von einem an seinem Außenumfang aufliegenden Federelement 11 zusammengehalten, wobei sein Innendurchmesser geringfügig größer als der Außendurchmesser des hin- und hergehenden Bauteils 2 ist - der Drosselring 8 soll ja im Betrieb der Abstreifanordnung möglichst fest an der inneren Stirnfläche 10 haften und könnte damit mit seinem Innenumfang nicht frei der Oberfläche des hin- und hergehenden Bauteils 2 folgen gelassen werden, sodaß die bei den wie beschrieben relativ frei in der Abstreifbuchse beweglichen Abstreifringen 5 hinzukommende Abstreiffunktion für den Drosselring 8 von vornherein nicht angestrebt wird. Der beispielsweise aus faserverstärktem Kunststoff bestehende Drosselring 8 übernimmt damit im wesentlichen nur die Funktion der zuverlässigen Absperrung der Eintrittsseite gegen den sonst möglichen Flüssigkeits-Teilstrom Q1 - das eigentliche Abstreifen der Flüssigkeit vom hin- und hergehenden Bauteil 2 erfolgt über den dafür speziell ausgebildeten Abstreifring 5.

Der Abstreifring 5 ist wiederum beispielsweise diagonal zweigeteilt, im eingebauten Zustand wie dargestellt von einem an seinem Außenumfang aufliegenden Federelement 12 zusammengehalten und besteht aus metallischem Werkstoff, wie etwa Lagerbronze. Um der Oberfläche des hin- und hergehenden Bauteils 2 möglichst gut folgen zu können ist die radiale Dicke des Abstreifringes 5 unter Berücksichtigung von Festigkeits- und Herstellungsanforderungen möglichst klein, sodaß sich die eigentliche Abstreifkante 13 möglichst gut an den Bauteil 2 anpassen kann. Von der im eingebauten Zustand des Abstreifringes 5 in Kontakt mit dem hin- und hergehenden Bauteil 2 liegenden Abstreifkante 13 aus ist ein sich zur anderen Seite hin öffnender, leichter Kegelbereich 14 am Innenumfang des Abstreifringes 5 vorgesehen, dessen Kegelwinkel sehr klein ist und beispielsweise etwa 2° beträgt. Damit kann zumindest ein großer Teil des trotz Abstreifkante 13 bzw. unter dieser hindurch noch hinter den Abstreifring 5 gelangende Teilstrom Q4, der auf der Oberfläche des Bauteils 2 haftet, mit diesem auch bei der auswärts gerichteten Retourbewegung (in Fig. 1 und 2 nach links) wieder zurück vor den Abstreifring 5 bzw. dessen Abstreifkante 13 kommen. Wenn dies nicht vorgesehen würde und der Abstreifring 5 beispielsweise auch an der in Fig. 2 rechten Seite mit einer scharfen Abstreifkante ausgestattet wäre, so würde die sich aufsummierende Flüssigkeitsmenge Q4 tatsächlich in unerwünschter Weise hinter die Abstreifanordnung transportiert.

Drosselring 8 und Abstreifring 5 weisen jeweils an ihrer dem Eintritt der abzustreifenden Flüssigkeit abgewandten Stirnseite im wesentlichen radial ausgerichtete Ablaufnuten 15, 16 auf, die ein Abfließen der abgestreiften Flüssigkeit in Richtung zur Ableitung 6 ermöglichen.

Gemäß Fig. 1 ist die Abstreifbuchse 4 insgesamt dreigeteilt - in einem ersten Eingangsbereich 17 ist der Drosselring 8 samt hier drei einzelnen Abstreifringen 5 angeordnet - im mittleren Bereich 18 sind zwei weitere Abstreifringe 5 vorgesehen - im in der Darstellung äußerst rechten Bereich 19 ist hier ein Gas-Dichtringset vorgesehen, welches üblicherweise als "SLP-Rings" (side loaded pressure rings) bezeichnet wird. Dieses üblicherweise mit den ersten beiden Ringen verkehrt herum vorgesehene Ringset, welches normalerweise als Gasdichtung Verwendung findet, unterstützt hier die Abstreifwirkung der Gesamtanordnung. Davon abgesehen könnte aber als letztes an der dem Drosselring 8 abgewandten Seite der Abstreifringe 5 beispielsweise auch ein mit der dem Eintritt der abzustreifenden Flüssigkeit abgewandten inneren Stirnfläche 20 der Abstreifbuchse 4 zusammenwirkender weiterer Drosselring vorgesehen sein, der den in Fig. 2 mit Q5 bezeichneten Teilstrom auf ähnliche Weise veroder zumindest behindert wie dies im Zusammenhang mit Q1 oben beschrieben wurde.

## Patentansprüche

1. Abstreifanordnung zur Verhinderung des Durchtrittes von Flüssigkeit am Umfangsspalt (1) zwischen einem hin- und hergehenden Bauteil (2) und einer diesen umgebenden Gehäuseöffnung (3), insbesonders Ölabstreifpackung für die Kolbenstange eines Hubkolbenkompressors, mit einer im Bereich der Gehäuseöffnung (3) um den Bauteil (2) ausgebildeten Abstreifbuchse (4), die zumindest einen Abstreifring (5) aufnimmt und eine Ableitung (6) zur Abführung der abgestreiften Flüssigkeit aufweist, **dadurch gekennzeichnet, dass** an der dem Eintritt der abzustreifenden Flüssigkeit (Q) zugewandten Seite (7) der Abstreifbuchse (4) ein Drosselring (8) zusammen mit zumindest einem Abstreifring (5) in einer gemeinsamen Kammer vorgesehen ist, der an seiner dem Eintritt der Flüssigkeit zugewandten Stirnseite mit glatter Ringfläche (9) ausgeführt ist und unter der Wirkung der Haftkraft (S1) in der Flüssigkeit an der ihm zugewandten, glatten inneren Stirnfläche (10) der Abstreifbuchse (4) haftet.

2. Anordnung nach Anspruch 1, **dadurch gekennzeichnet, dass** der Drosselring (8) geteilt, vorzugsweise diagonal zweigeteilt, ist und im eingebauten Zustand von einem an seinem Außenumfang aufliegenden Federelement (11) zusammengehalten wird, wobei sein Innendurchmesser geringfügig größer als der Außendurchmesser des hin-und hergehenden Bauteils (2) ist.

3. Anordnung nach Anspruch 1 oder 2, **dadurch gekennzeichnet, dass** der Drosselring (8) aus Kunststoff, vorzugsweise faserverstärkt, besteht.

4. Anordnung nach einem der Ansprüche 1 bis 3, **dadurch gekennzeichnet, dass** die Ringfläche zwischen den Stirnflächen (9, 10) von Abstreifbuchse (4) und Drosselring (8) wesentlich, vorzugsweise etwa zehn mal, größer als die stirnseitige Kontaktfläche der (des) Abstreifringe(s) (5) ist.

5. Anordnung nach einem oder mehreren der Ansprüche 1 bis 4, **dadurch gekennzeichnet, daß** der bzw. jeder an der dem Eintritt der abzustreifenden Flüssigkeit abgewandten Seite des Drosselringes (8) in der Abstreifbuchse (4) angeordnete Abstreifring (5) geteilt, vorzugsweise diagonal zweigeteilt, ist, im eingebauten Zustand von einem an seinem Außenumfang aufliegenden Federelement (12) zusammengehalten wird, und aus metallischem Werkstoff, vorzugsweise Lagerbronze, besteht

6. Anordnung nach Anspruch 5, **dadurch gekennzeichnet, daß** die radiale Dicke des Abstreifringes (5) unter Berücksichtigung von Festigkeits- und Herstellungsanforderungen möglichst klein, vorzugsweise etwa 4 mm, ist.

7. Anordnung nach Anspruch 5 oder 6, **dadurch gekennzeichnet, daß** der Abstreifring (5) an seiner dem Eintritt der abzustreifenden Flüssigkeit zugewandten Seite eine im eingebauten Zustand in Kontakt mit dem hin-und hergehenden Bauteil (2) liegende Abstreifkante (13) und von dieser ausgehend einen sich zur anderen Seite hin öffnenden, leichten Kegelbereich (14) am Innenumfang aufweist.

8. Anordnung nach einem oder mehreren der Ansprüche 1 bis 7, **dadurch gekennzeichnet, daß** Drosselring (8) und Abstreifring (5) jeweils an ihrer dem Eintritt der abzustreifenden Flüssigkeit abgewandten Stirnseite im wesentlichen radial ausgerichtete Ablaufnuten (15, 16) aufweisen.

9. Anordnung nach einem oder mehreren der Ansprüche 1 bis 8, **dadurch gekennzeichnet, daß** an der dem Drosselring (8) abgewandten Seite der (des) Abstreifringe(s) (5) zumindest ein Gas-Dichtringset (21) und/oder ein mit der dem Eintritt der abzustreifenden Flüssigkeit abgewandten inneren Stirnfläche (20) der Abstreifbuchse (4) zusammenwirkender weiterer Drosselring in der Abstreifbuchse (4) angeordnet ist.

## Claims

1. A scraper device for preventing the passage of liquid at the peripheral gap (1) between a reciprocating component (2) and a housing opening (3), in particular an oil-scraper packing for the piston rod of a reciprocating-piston compressor, surrounding the said component (2), with a scraper bush (4) which is formed in the region of the housing opening (3) around the component (2) and which receives at least one scraper ring (5) and has a discharge line (6) for the removal of the liquid scraped off, **characterized in that,** on the side (7) of the scraper bush (4) facing the entry of the liquid (**Q**) to be scraped off, a throttle ring (8) is provided together with at least one scraper ring (5) in a common chamber, and the throttle ring (8) is produced with a smooth annular face (9) on its end face facing the entry of the liquid and, under the action of the adhesion force (**S1**) in the liquid, adheres to the smooth inner end face (10) of the scraper bush (4) facing it.

2. A device according to Claim 1, **characterized in that** the throttle ring (8) is divided, and preferably divided into two diagonally, and in the fitted state it is held together by a spring element (11) which rests on its external periphery, wherein its internal diameter is slightly larger than the external diameter of the reciprocating component (2).

3. A device according to Claim 1 or 2, **characterized in that** the throttle ring (8) consists of plastics material, preferably reinforced with fibres.

4. A device according to one of Claims 1 to 3, **characterized in that** the annular face between the end faces (9, 10) of the scraper bush (4) and the throttle ring (8) is substantially, and preferably approximately ten times, larger than the contact face on the end face of the scraper ring or rings (5).

5. A device according to one or more of Claims 1 to 4, **characterized in that** the or each scraper ring (5) arranged in the scraper bush (4) on the side of the throttle ring (8) facing away from the entry of the liquid to be scraped off is divided, and preferably divided into two diagonally, is held together in the fitted state by a spring element (11) resting on its external periphery, and consists of metallic material, preferably bronze for bearings.

6. A device according to Claim 5, **characterized in that** the radial thickness of the scraper ring (5) is as small as possible, preferably approximately 4 mm, whilst taking into consideration requirements of strength and manufacturing.

7. A device according to Claim 5 or 6, **characterized in that** the side of the scraper ring (5) facing the entry of the liquid to be scraped off has a scraper edge (13) arranged in contact with the reciprocating component (2) in the fitted state and, starting from the said scraper edge (13), the internal periphery of the said scraper ring (5) has a slightly tapered region (14) opening towards the other side.

8. A device according to one or more of Claims 1 to 7, **characterized in that** the throttle ring (8) and the scraper ring (5) each have discharge grooves (15, 16) orientated substantially radially on their end face facing away from the entry of the liquid to be scraped off.

9. A device according to one or more of Claims 1 to 8, **characterized in that** on the side of the scraper ring or rings (5) facing away from the throttle ring (8) at least one gas-sealing ring set (21) and/or a further throttle ring co-operating with the inner end face (20) of the scraper bush (4) facing away from the entry of the liquid to be scraped off is or are arranged in the scraper bush (4).

## Revendications

1. Agencement de racleur pour empêcher le passage de liquide au niveau de l'interstice périphérique (1) entre une pièce (2) mobile en va-et-vient et une ouverture de carter (3) qui l'entoure, notamment une garniture de racleur d'huile pour la tige de piston d'un compresseur à piston alternatif, l'agencement comprenant une douille de racleur (4) qui est réalisée dans la zone de l'ouverture de carter (3) autour de la pièce (2), reçoit au moins un anneau de racleur (5), et présente une conduite d'évacuation (6) pour évacuer le liquide raclé, **caractérisé en ce que** sur le côté (7) de la douille de racleur (4), qui est situé vers l'entrée du liquide (Q) à racler, il est prévu dans une chambre commune, en commun avec au moins un anneau de racleur (5), un anneau d'étranglement (8) qui, sur sa face frontale dirigée vers l'entrée du liquide, est réalisée avec une surface annulaire (9) lisse, et qui adhère à la surface frontale intérieure (10) lisse de la douille de racleur (6), qui lui est voisine, sous l'effet des forces d'adhérence (S1) dans le liquide.

2. Agencement selon la revendication 1, **caractérisé en ce que** l'anneau d'étranglement (8) est divisé en deux parties, de préférence de manière diagonale, et est, dans l'état monté, maintenu assemblé par un élément de ressort (11) s'appliquant sur sa périphérie extérieure, son diamètre intérieur étant légèrement supérieur au diamètre extérieur de la pièce (2) mobile en va-et-vient.

3. Agencement selon la revendication 1 ou 2, **caractérisé en ce que** l'anneau d'étranglement (8) est réalisé en matière plastique, de préférence renforcée de fibres.

4. Agencement selon l'une des revendications 1 à 3, **caractérisé en ce que** la surface annulaire entre les faces frontales (9, 10) de la douille de racleur (4) et l'anneau d'étranglement (8) est sensiblement, de préférence environ dix fois plus grande que la surface de contact frontale de l'anneau ou des anneaux de racleur (5).

5. Agencement selon l'une ou plusieurs des revendications 1 à 4, **caractérisé en ce que** l'anneau ou respectivement chaque anneau de racleur (5) disposé dans la douille de racleur (4), sur le côté de l'anneau d'étranglement (8), qui est opposé au côté de l'entrée du liquide à racler, est divisé, de préférence divisé de manière diagonale en deux parties, est maintenu assemblé, dans l'état monté, par un élément de ressort (12) s'appliquant sur sa périphérie extérieure, et est réalisé en un matériau métallique, de préférence du bronze de coussinet de palier.

6. Agencement selon la revendication 5, **caractérisé en ce que** l'épaisseur radiale de l'anneau de racleur (5) est la plus petite possible, en tenant compte d'exigences de résistance et de fabrication, et vaut de préférence environ 4 mm.

7. Agencement selon la revendication 5 ou 6, **caractérisé en ce que** l'anneau de racleur (5) présente sur son côté dirigé vers l'entrée du liquide à racler, une arête de racleur (13), qui, dans l'état monté, est en contact avec la pièce (2) mobile en va-et-vient, et une zone (14) légèrement conique issue de cette arête de racleur (13) et s'ouvrant en direction de l'autre côté.

8. Agencement selon l'une ou plusieurs des revendications 1 à 7, **caractérisé en ce que** l'anneau d'étranglement (8) et l'anneau de racleur (5) présentent chacun sur sa face frontale opposée à celle dirigée vers l'entrée du liquide à racler, des rainures d'écoulement (15, 16) d'orientation sensiblement radiale.

9. Agencement selon l'une ou plusieurs des revendications 1 à 8, **caractérisé en ce que** sur le côté de l'anneau ou des anneaux de racleur (5), qui est opposé à celui dirigé vers l'anneau d'étranglement (8), est disposé, dans la douille de racleur (4), au moins une garniture d'anneaux d'étanchéité au gaz (21) et/ou un autre anneau d'étranglement coopérant avec la face frontale intérieure (20) qui est opposée à l'entrée du liquide à racler.
